# EUROPEAN PATENT APPLICATION

(11) **EP 4 610 314 A1**
(43) Date of publication of application: **03.09.2025**
(21) Application number: 23882398.3
(22) Date of filing: 10.10.2023
(51) Int. Cl.: C08L 83/06, C08L 83/08

(54) **CURABLE SILICONE RESIN COMPOSITION THAT IS RECYCLABLE**

(30) Priority: 27.10.2022 JP 2022171992
(71) Applicant: SHIN-ETSU CHEMICAL CO., LTD., Tokyo 1000005 (JP)
(72) Inventor: FUJITA Shoji, Annaka-shi, Gunma 379-0224 (JP)
(74) Representative: Angerhausen, Christoph
(86) International application number: PCT/JP2023/036668
(87) International publication number: WO 2024/090189

(57) **Abstract**

Provided is a silicone resin composition with recyclability which can be easily liquefied through heat application. The curable silicone resin composition contains (A) a furanyl group-containing organopolysiloxane having a number average molecular weight of 500 to 40,000 and (B) a maleimide group-containing organopolysiloxane having a number average molecular weight of 500 to 40,000. Also provided is a method of recycling a curable silicone resin composition, including a step of heating a cured product of the curable silicone resin composition to 130°C or higher.

## Description

### Technical Field

The present invention relates to a curable silicone resin composition with recyclability.

### Background Art

Silicone resins are utilized in diverse applications, including building sealants and automotive body coating agents. However, since silicone resins are thermosetting resins, they are difficult to disintegrate and reprocess (recycle) themselves through heat application. It is still possible to depolymerize them through main chain cracking using acids or bases, or by exposing them to extremely high-temperature environments such as those exceeding 400°C. However, recycling is challenging due to issues with waste liquid treatment associated with the neutralization process and the energy required for repolymerization.

Patent document 1 discloses an attempt to impart disintegrability by incorporating thermally expandable microcapsules into silicone resin. However, the document does not address the recycling of the disintegrated silicone resin.

### Prior Art Documents

### Patent documents

Patent document 1: JP-A-2004-123943

### Summary of Invention

### Technical Problem

It is therefore an object of the present invention to provide a silicone resin composition that is recyclable and that can be easily liquefied through heat application.

### Solution to Problem

The inventor has conducted a series of intensive studies to solve the foregoing problem and has consequently found that a silicone resin composition containing a furanyl group-containing organopolysiloxane and a maleimide group-containing organopolysiloxane is a curable silicone resin composition with recyclability, which liquefies at a temperature of 130°C or higher, thus completing the present invention.

Accordingly, the present invention provides a curable silicone resin composition with recyclability which is as defined below.

<1> A curable silicone resin composition comprising the components (A) and (B) of:
   (A) a furanyl group-containing organopolysiloxane having a number average molecular weight of 500 to 40,000 and represented by a formula (1) defined in the following as: 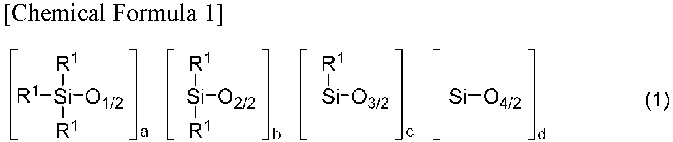 wherein, in the formula (1), each R¹ independently represents a group selected from the group consisting of a hydrogen atom, a monovalent hydrocarbon group having 1 to 10 carbon atoms, an alkoxy group having 1 to 4 carbon atoms, a hydroxyl group, and furanyl groups represented by formulae (2) and (3) as defined below, wherein at least two of the R¹ s in each molecule are each a furanyl group represented by a formula (2) or (3) as defined below, and wherein a is a number of 2 or more, b is a number of 0 or more, c is a number of 0 or more, d is a number of 0 or more, and they satisfy 2 ≤ a + b + c + d ≤ 500, 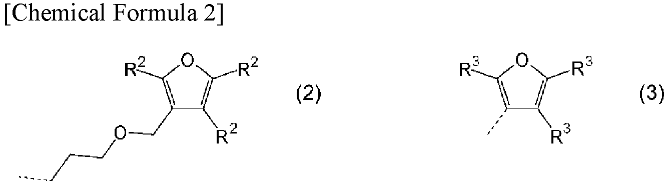 wherein, in the formulae (2) and (3), each of the R² s and R³s independently represents a hydrogen atom or a linear alkyl group having 1 to 10 carbon atoms, and the broken lines represent bonds; and
   (B) a maleimide group-containing organopolysiloxane having a number average molecular weight of 500 to 40,000 and represented by a formula (4) defined in the following as: 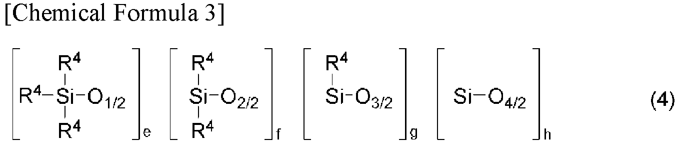 wherein, in the formula (4), each R⁴ independently represents a monovalent hydrocarbon group having 1 to 10 carbon atoms or a maleimide group represented by a formula (5) as defined below, wherein at least two of the R⁴ s in each molecule are each a maleimide group represented by a formula (5) as defined below, and wherein e is a number of 2 or more, f is a number of 0 or more, g is a number of 0 or more, h is a number of 0 or more, and they satisfy 2 ≤ e + f + g + h ≤ 500, 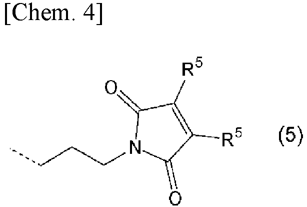 wherein, in the formula (5), each R⁵ independently represents a hydrogen atom or a methyl group, and the broken line represents a bond.
<2> The curable silicone resin composition according to <1>, wherein either one or both of d in the formula (1) and h in the formula (4) is/are 0.
<3> The curable silicone resin composition according to <1> or <2>, wherein either one or both of c in the formula (1) and g in the formula (4) is/are 0.
<4> The curable silicone resin composition according to any one of <1> to <3>, wherein c and d in the formula (1) and g and h in the formula (4) are all 0.
<5> A method of recycling a curable silicone resin composition, comprising a step of heating a cured product of the curable silicone resin composition according to any one of <1> to <4> to 130°C or higher.

### Advantageous Effects of Invention

The present invention can provide a curable silicone resin composition with recyclability, which liquifies when the composition is heated at a temperature of 130°C or higher. This silicone resin composition is also curable at relatively low temperatures, from 0°C to 100°C. In addition, the curable silicone resin composition of the present invention is useful for applications such as adhesive agents, gluing agents, sealing agents, and coating agents.

### Description of Embodiments

The present invention will be described in detail hereunder.

### [(A) Furanyl group-containing organopolysiloxane]

The component (A) of the present invention is a furanyl group-containing organopolysiloxane, having a number average molecular weight of 500 to 40,000, represented by a formula (1) defined in the following as:

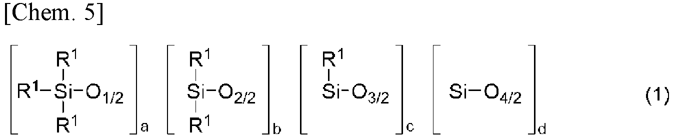

In the above formula (1), each R¹ independently represents a group selected from the group consisting of a hydrogen atom, a monovalent hydrocarbon group having 1 to 10 carbon atoms, an alkoxy group having 1 to 4 carbon atoms, a hydroxyl group, and furanyl groups represented by formulae (2) and (3) as set forth below, wherein at least two of the R¹ s in each molecule are each a furanyl group represented by formula (2) or (3) as set forth below. a is a number of 2 or more, b is a number of 0 or more, c is a number of 0 or more, d is a number of 0 or more, and they satisfy 2 ≤ a + b + c + d ≤ 500.

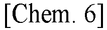

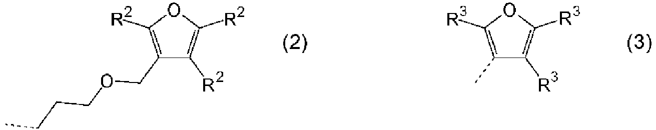

In the above formulae (2) and (3), each of the R²s and R³s independently represents a hydrogen atom or a linear alkyl group having 1 to 10 carbon atoms. The broken lines represent bonds.

In the above formula (1), each R¹ independently represents a group selected from the group consisting of a hydrogen atom, a monovalent hydrocarbon group having 1 to 10 carbon atoms, an alkoxy group having 1 to 4 carbon atoms, a hydroxyl group, and furanyl groups represented by the above formulae (2) and (3). Examples of the monovalent hydrocarbon group having 1 to 10 carbon atoms represented by R¹ in the formula (1) include alkyl groups such as a methyl group, an ethyl group, a propyl group, and a butyl group; cycloalkyl groups such as a cyclopentyl group and a cyclohexyl group; and aryl groups such as a phenyl group and a tolyl group, while examples of the alkoxy group having 1 to 4 carbon atoms include a methoxy group, an ethoxy group, a propoxy group, and a butoxy group.

At least 2, preferably 2 to 4, of the R¹ s in each molecule are each a furanyl group represented by the above formula (2) or (3). It is preferred that the remaining groups, other than these furanyl groups, each be an alkyl group, a cycloalkyl group, or an aryl group, more preferably be a methyl group or a phenyl group.

In the above formulae (2) and (3), each of the R² s and R³s independently represents a hydrogen atom or a linear alkyl group having 1 to 10 carbon atoms. Examples of the linear alkyl group having 1 to 10 carbon atoms represented by R² or R³ in the formula (2) or (3) include a methyl group, an ethyl group, a propyl group and a butyl group. It is particularly preferred that each of the R² s and R³ s be a hydrogen atom or a methyl group.

In the above formula (1), a is a number of 2 or more, preferably of 2 to 12; b is a number of 0 or more, preferably of 1 to 498, more preferably of 5 to 300; and c is a number of 0 or more, preferably of 0 to 10, more preferably of 0. d is a number of 0 or more, preferably of 0 to 5, more preferably of 0. In addition, they satisfy 2 ≤ a + b + c + d ≤ 500, preferably satisfy 2 ≤ a + b + c + d ≤ 300, more preferably satisfy 3 ≤ a + b + c + d ≤ 300, and even more preferably satisfy 4 ≤ a + b + c + d ≤ 150. A furanyl group-containing organopolysiloxane in which a + b + c + d is greater than 500 may result in enhanced viscosity, and thus lead to poor workability.

The furanyl group-containing organopolysiloxane of the present invention has a molecular weight of 500 to 40,000, preferably of 1,000 to 20,000, and more preferably of 1,000 to 10,000 in terms of number average molecular weight. A molecular weight smaller than 500 may fail to exhibit (poly)siloxane-originated properties such as flexibility, while a molecular weight exceeding 40,000 may cause the furanyl group-containing organopolysiloxane to have enhanced viscosity, leading to poor workability and, therefore, unfavorable.

The term "number average molecular weight" as used herein refers to a value that is measured by GPC (Gel Permeation Chromatography) under the following measurement conditions, using polystyrene as a reference substance (this applies throughout).

### [Measurement Conditions]

Developing solvent: Tetrahydrofuran (THF)
Flow rate: 0.6 mL/min
Detector: Differential refractive index detector (RI)
Column: TSK Guard column Super H-H
   TSKgel SuperHM-N (6.0 mm I.D. × 15 cm × 1)
   TSKgel SuperH2500 (6.0mm I.D. × 15 cm × 1)
   (all manufactured by Tosoh Corporation)
Column temperature: 40°C
Sample injection volume: 50 µL (THF solution with a concentration of 0.3% by mass)

### [(B)maleimide group-containing organopolysiloxane]

The component (B) of the present invention is a maleimide group-containing organopolysiloxane, having a number average molecular weight of 500 to 40,000, represented by a formula (4) defined in the following as:

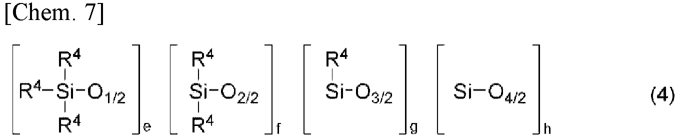

In the above formula (4), each R⁴ independently represents a monovalent hydrocarbon group having 1 to 10 carbon atoms or a maleimide group represented by a formula (5) as set forth below, wherein at least two, preferably 2 to 8, of the R⁴ s in each molecule are each a maleimide group represented by a formula (5) as set forth below. e is a number of 2 or more, f is a number of 0 or more, g is a number of 0 or more, h is a number of 0 or more, and they satisfy 2 ≤ e + f + g + h ≤ 500.

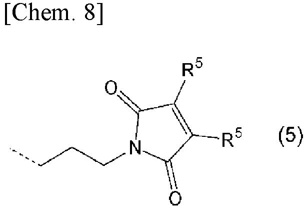

In the above formula (5), each R⁵ independently represents a hydrogen atom or a methyl group. The broken line represents a bond.

In the above formula (4), each R⁴ independently represents a monovalent hydrocarbon group having 1 to 10 carbon atoms or a maleimide group represented by the above formula (5), wherein at least two of the R⁴ s in each molecule are each a maleimide group represented by the above formula (5). Examples of the monovalent hydrocarbon group having 1 to 10 carbon atoms represented by R⁴ in the formula (4) include alkyl groups such as a methyl group, an ethyl group, a propyl group, and a butyl group; cycloalkyl groups such as a cyclopentyl group and a cyclohexyl group; and aryl groups such as a phenyl group and a tolyl group. It is particularly preferred that the group be an alkyl group, a cycloalkyl group, or an aryl group, more preferably be a methyl group or a phenyl group.

In the above formula (5), each R⁵ is a hydrogen atom or a methyl group. Particularly, a hydrogen atom is preferred.

In the above formula (4), e is a number of 2 or more, preferably of 2 to 12; f is a number of 0 or more, preferably of 1 to 498, more preferably of 5 to 300; and g is a number of 0 or more, preferably of 0 to 10, more preferably of 0. h is a number of 0 or more, preferably of 0 to 5, more preferably of 0. In addition, they satisfy 2 ≤ e + f + g + h ≤ 500, preferably satisfy 2 ≤ e + f + g + h ≤ 300, more preferably satisfy 3 ≤ e + f + g + h ≤ 300, and even more preferably satisfy 4 ≤ e + f + g + h ≤ 150. A maleimide group-containing organopolysiloxane in which e + f + g + h is greater than 500 may result in enhanced viscosity, thus leading to poor workability.

The maleimide group-containing organopolysiloxane of the present invention has a molecular weight of 500 to 40,000, preferably of 1,000 to 20,000, and more preferably of 1,000 to 10,000 in terms of number average molecular weight. The molecular weight smaller than 500 may fail to exhibit (poly)siloxane-originated properties such as flexibility, while a molecular weight exceeding 40,000 may cause the maleimide group-containing organopolysiloxane to have enhanced viscosity, leading to poor workability.

The amount of the component (B) to be added therein is determined such that the component (B) has preferably 1 to 2 equivalents, more preferably 1.1 to 1.5 equivalents, of maleimide groups per 1 equivalent of furanyl groups in the component (A).

Here, it is preferred that the composition of the present invention contain 60 to 100% by mass, more preferably 80 to 100% by mass, even more preferably 90 to 100% by mass, of the components (A) and (B).

### [Further component]

The curable silicone resin composition of the present invention may additionally contain a further component that has not defined in the above so long as the advantageous effects of the present invention are not impaired. Examples of such further component not defined in the above include binders such as silica powder and metal fillers.

### [Method of producing curable silicone resin composition]

A known technique may be used for a method of mixing liquid substances for producing the curable silicone resin composition with recyclability of the present invention. Particularly, the furanyl group-containing organopolysiloxane (A) and the maleimide group-containing organopolysiloxane (B) exhibit excellent compatibility with each other, which allows for the formation of a uniform composition by simply mixing the ingredients at room temperature (25°C).

When a further component other than the furanyl group-containing organopolysiloxane (A) and the maleimide group-containing organopolysiloxane (B) is added to the composition of the present invention, it is preferred that such component be dispersed in advance in the component(s) (A) and/or (B) using a known method, which is then simply mixed at room temperature (25°C).

### [Method of curing curable silicone resin composition]

As to the method of curing the curable silicone resin composition of the present invention, it is preferred that the curable silicone resin composition be cured under the curing conditions at temperature of 0 to 100°C, preferably 15 to 80°C, for 12 to 96 hours, preferably 24 to 72 hours.

### [Method of recycling curable silicone resin]

The method of recycling the silicone resin that is a cured product of the curable silicone resin composition of the present invention includes a step of heating the cured product at 130°C or higher, preferably at 130 to 160°C, for 3 to 30 minutes, preferably 3 to 10 minutes. This heating step allows the cured product of the curable silicone resin composition of the present invention to liquefy, and the liquefied curable silicone resin composition will be cured again under the above-explained curing conditions, thus enabling it to be recycled.

### Examples

The present invention will be described in greater detail hereunder with reference to working examples; however, the scope of the present invention shall not be construed as being limited to the specific examples shown below.

### <Working Example 1>

3.79 g of furanyl group-containing organopolysiloxane (number average molecular weight of 7,570) as shown in the following formula (6) and 2.58 g of maleimide group-containing organopolysiloxane (number average molecular weight of 6,880) as shown in the following formula (7) were stirred with each other at room temperature (25°C) for 5 minutes, and the resultant silicone resin composition was left to stand at room temperature for 3 days to achieve curing. The cured silicone resin composition was heated in an oven at 150°C for 5 minutes, resulting in complete liquefaction of the composition. The liquefied composition was left to stand again at room temperature for 3 days, during which it cured again.

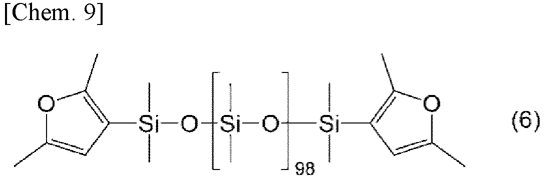

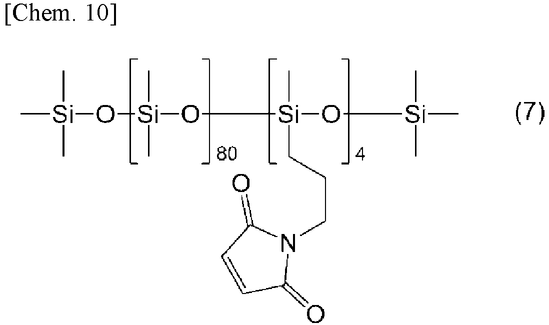

### <Working Example 2>

3.84 g of furanyl group-containing organopolysiloxane (number average molecular weight of 7,680) as shown in the following formula (8) and 2.58 g of maleimide group-containing organopolysiloxane (number average molecular weight of 6,880) as shown in the above-defined formula (7) were stirred with each other at room temperature (25°C) for 5 minutes, and the resultant silicone composition was left to stand at room temperature for 3 days to achieve curing. The cured silicone resin composition was heated in an oven at 150°C for 5 minutes, resulting in complete liquefaction of the composition. The liquefied composition was left to stand again at room temperature for 3 days, during which it cured again.

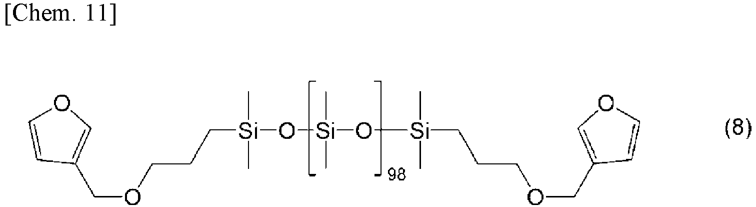

### <Working Example 3>

2.10 g of furanyl group-containing organopolysiloxane (number average molecular weight of 6,310) as shown in the following formula (9) and 2.58 g of maleimide group-containing organopolysiloxane (number average molecular weight of 6,880) as shown in the above-defined formula (7) were stirred with each other at room temperature (25°C) for 5 minutes, and the resultant silicone composition was left to stand at room temperature for 3 days to achieve curing. The cured silicone resin composition was heated in an oven at 150°C for 5 minutes, resulting in complete liquefaction of the composition. The liquefied composition was left to stand again at room temperature for 3 days, during which it cured again.

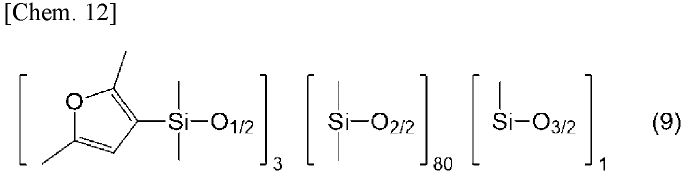

### <Working Example 4>

2.13 g of furanyl group-containing organopolysiloxane (number average molecular weight of 6,400) as shown in the following formula (10) and 2.58 g of maleimide group-containing organopolysiloxane (number average molecular weight of 6,880) as shown in the above-defined formula (7) were stirred with each other at room temperature (25°C) for 5 minutes, and the resultant silicone composition was left to stand at room temperature for 3 days to achieve curing. The cured silicone resin composition was heated in an oven at 150°C for 5 minutes, resulting in complete liquefaction of the composition. The liquefied composition was left to stand again at room temperature for 3 days, during which it cured again.

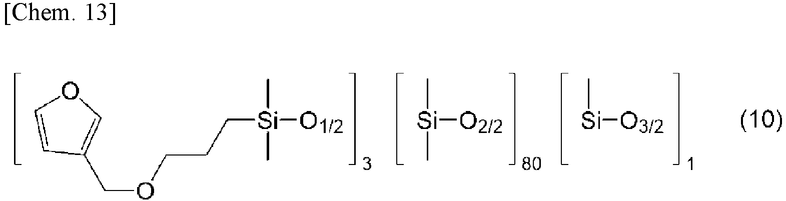

### <Comparative Example 1>

0.3 g of furanyl group-containing organopolysiloxane (number average molecular weight of 290) as shown in the following formula (11) and 2.58 g of maleimide group-containing organopolysiloxane (number average molecular weight of 6,880) as shown in the above-defined formula (7) were stirred with each other at room temperature (25°C) for 5 minutes, and the resultant silicone composition was left to stand at room temperature for 3 days. As the result, it only increased its viscosity and did not cure.

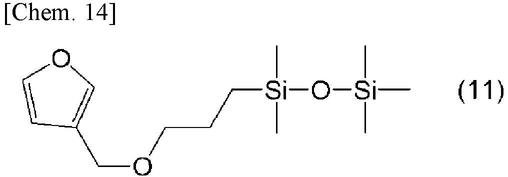

## Claims

1. A curable silicone resin composition comprising the components (A) and (B) of:
(A) a furanyl group-containing organopolysiloxane having a number average molecular weight of 500 to 40,000 and represented by a formula (1) defined in the following as: 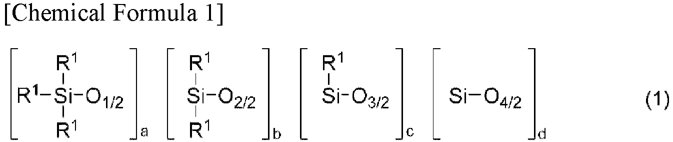 wherein, in the formula (1), each R¹ independently represents a group selected from the group consisting of a hydrogen atom, a monovalent hydrocarbon group having 1 to 10 carbon atoms, an alkoxy group having 1 to 4 carbon atoms, a hydroxyl group, and furanyl groups represented by formulae (2) and (3) as defined below, wherein at least two of the R¹ s in each molecule are each a furanyl group represented by a formula (2) or (3) as defined below, and wherein a is a number of 2 or more, b is a number of 0 or more, c is a number of 0 or more, d is a number of 0 or more, and they satisfy 2 ≤ a + b + c + d ≤ 500, 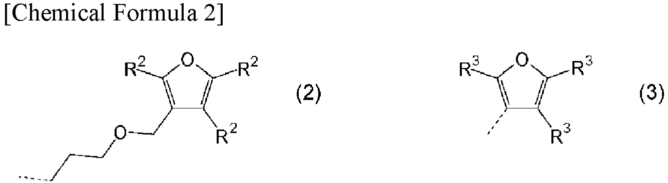 wherein, in the formulae (2) and (3), each of the R² s and R³s independently represents a hydrogen atom or a linear alkyl group having 1 to 10 carbon atoms, and the broken lines represent bonds; and
(B) a maleimide group-containing organopolysiloxane having a number average molecular weight of 500 to 40,000 and represented by a formula (4) defined in the following as: 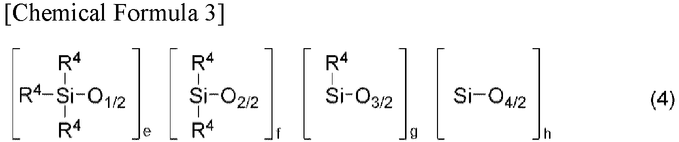 wherein, in the formula (4), each R⁴ independently represents a monovalent hydrocarbon group having 1 to 10 carbon atoms or a maleimide group represented by a formula (5) as defined below, wherein at least two of the R⁴ s in each molecule are each a maleimide group represented by a formula (5) as defined below, and wherein e is a number of 2 or more, f is a number of 0 or more, g is a number of 0 or more, h is a number of 0 or more, and they satisfy 2 ≤ e + f + g + h ≤ 500, 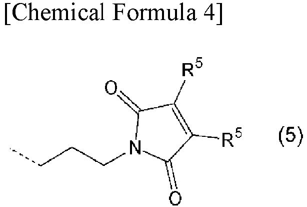 wherein, in the formula (5), each *R⁵* independently represents a hydrogen atom or a methyl group, and the broken line represents a bond.

2. The curable silicone resin composition according to claim 1, wherein either one or both of d in the formula (1) and h in the formula (4) is/are 0.

3. The curable silicone resin composition according to claim 1, wherein either one or both of c in the formula (1) and g in the formula (4) is/are 0.

4. The curable silicone resin composition according to claim 1, wherein c and d in the formula (1) and g and h in the formula (4) are all 0.

5. A method of recycling a curable silicone resin composition, comprising a step of heating a cured product of the curable silicone resin composition according to any one of claims 1 to 4 to 130°C or higher.
